(19) Europäisches Patentamt
European Patent Office
Office européen des brevets

(11) **EP 4 014 093 B1**

(12) **EUROPEAN PATENT SPECIFICATION**

(45) Date of publication and mention
of the grant of the patent:
**29.10.2025 Bulletin 2025/44**

(21) Application number: **20863694.4**

(22) Date of filing: **11.09.2020**

(51) International Patent Classification (IPC):
**G02F 1/153** *(2006.01)*     **G02B 1/116** *(2015.01)*
**G02F 1/157** *(2006.01)*

(52) Cooperative Patent Classification (CPC):
**G02F 1/155; G02F 1/157;** G02F 1/13439;
G02F 2201/38

(86) International application number:
**PCT/US2020/050278**

(87) International publication number:
**WO 2021/050793 (18.03.2021 Gazette 2021/11)**

(54) **ANTI-REFLECTIVE ELECTRODES**

ANTIREFLEKTIERENDE ELEKTRODEN

ÉLECTRODES ANTIREFLET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2019 US 201962898689 P**

(43) Date of publication of application:
**22.06.2022 Bulletin 2022/25**

(73) Proprietor: **GENTEX CORPORATION**
**Zeeland, Michigan 49464 (US)**

(72) Inventors:
• **SAENGER NAYVER, Mario F.**
**Zeeland, Michigan 49464 (US)**
• **NEUMAN, George A.**
**Zeeland, Michigan 49464 (US)**
• **ANDERSON, John S.**
**Zeeland, Michigan 49464 (US)**

(74) Representative: **Müller-Boré & Partner**
**Patentanwälte PartG mbB**
**Friedenheimer Brücke 21**
**80639 München (DE)**

(56) References cited:
WO-A1-94/15247          CN-B- 104 880 884
US-A- 5 534 743          US-A1- 2006 269 731
US-A1- 2007 241 668      US-A1- 2011 194 045
US-A1- 2018 113 306

**Description**

**CROSS REFERENCE TO RELATED APPLICATIONS**

This application claims the benefit of and priority to U.S. Provisional Patent Application No. 62/898,689, filed on September 11, 2019, entitled Anti-Reflective Electrodes.

**FIELD OF THE DISCLOSURE**

This disclosure relates generally to anti-reflective electrodes, and in particular, to anti-reflective electrodes for use in electro-optic elements.

**BACKGROUND**

Surfaces comprising electro-optic elements have a variety of applications, and may be used in mirrors, displays, and other devices. However, under certain circumstances, the electro-optic elements of the devices may exhibit unwanted reflections.

For example, in the visible spectral range, heads-up displays (BUDs) may display information to users on a display screen disposed on or in front of a windscreen in a vehicle, an aircraft, a watercraft, and the like. In many HUDs, images are projected onto a display element and reflected to a user. This may allow a user to see important information, such as instrument readings or navigational aids, without having to refocus or look away from the exterior scene. However, in certain conditions, such as in bright light, the data displayed on the display element of the HUD may be difficult to see. Therefore, some heads-up displays may comprise an electro-optic (EO) element to improve contrast between the images projected on the display element of the HUD and the surroundings. The EO element may selectively darken to vary the amount of light transmission through the screen, thereby improving the contrast between the projected images and the surroundings. The projected images appearing on the display element of the HUD may be reflected to the user from one of the surfaces of the EO element. The display element may comprise a plurality of substrates, each substrate having a first and a second surface. A transflector layer may be disposed on one of the surfaces forward of the electro optic component used to modify the transmittance. The transflector layer may have a fixed reflectance. An electro-optic medium is disposed behind the transflector coating and, therefore, electro-optic medium will not attenuate the reflectance of the transflector. The reflectance of the transflector coating, ideally, is the only reflectance desired. The reflectance from the surfaces without the transflector coating may be relatively high and may, under certain circumstances, cause double images to appear. This may cause the projected images to appear blurry or unclear.

In another example, a switchable mirror, such as described in U.S. Patent Nos. 9,057,875, 8,879,139, 9,505,349, 9,575,315, 10,018,843, and U.S. Patent Application Publication No. 2018/0329210, may display undesired ghost images. Ghost images are residual reflected images which compete against a display image and which may, therefore, be objectionable. The switchable mirror may comprise an electro-optic element comprising a first and a second substrate bonded together to form a chamber which may contain electro-optic material. Incident light may be reflected from different surfaces of different substrates. The ghost images may arise from the reflections of the incident light coming from the different surfaces of the layers which make up the switchable mirror assembly.

In another example, a switchable mirror may additionally comprise a liquid crystal element having a first and a second substrate held in a parallel configuration with a seal around the perimeter to form a chamber. The chamber may be filled with a liquid crystal material to form a liquid crystal cell. As with the example above, light may reflect off the different interfaces between the surfaces of the liquid crystal element. Thus, the liquid crystal component of an electro-optic switchable mirror may be prone to ghost images.

In yet another example, there may be a need to hide an optical device such as a display, sensor, or camera behind an electroactive element. When the electroactive medium is dark, the appearance of the device is black since it is not reflecting any light. This may be used to camouflage the presence of a device on a dark or black surface. However, light may be reflected from some of the surfaces of the electroactive element.

WO 94/15247 A1 describes electrochromic devices that may be used for large surface area applications. The devices utilize optical tuning layers to minimize optical interference between layers of the structure and to maximize uniform optical transparency. Optical tuning also enables transparent conductive oxide layers to be replaced by thin conductive metal layers, thereby reducing the overall thickness of these devices and facilitating the manufacturing process.

CN 104 880 884 B describes an electrochromic intelligent glass comprising a substrate. A first anti-reflection layer, a second anti-reflection layer, a first transparent conductive layer, an electrochromic layer, an ion conductive layer, an ion storage layer, a second transparent conductive layer and a third anti-reflection layer are disposed in order on the substrate. A target for each layer is a planar cathode or rotary cathode made by magnetron sputtering.

US 2018/113306 A1 describes a transparency including a first substrate having a first surface and a second surface. A second substrate includes a third surface and a fourth surface. An optical coating is positioned on the fourth surface. The optical coating having a refractive index of greater than about 1.8 and an nk ratio of greater than about 0.6. The reflectance of the fourth surface has a reflectance of less than about 1.2% as measured from the first surface.

US 2006/269731 A1 describes an antireflection film that is formed by laminating a hard coat layer, a high refractive index layer, and a low refractive index layer in that order on a transparent base film. Alternatively, an antireflection film is formed by laminating an electrically conductive high refractive index hard coat layer and a low refractive index layer in that order on a transparent base film. The low refractive index layer is composed of a coating film cured by ultraviolet irradiation in an atmosphere having an oxygen concentration of 0 to 10,000 ppm, the coating film containing hollow silica fine particles, a polyfunctional (meth)acrylic compound, and a photopolymerization initiator.

US 2007/241668 A1 describes an organic, electro-optical element which comprises a substrate and at least one electro-optical structure which comprises an active layer with at least one organic, electro-optical material, the substrate having at least one antireflection coating with at least one layer, and the antireflection coating layer having a thickness and a refractive index for which the integral reflectivity at the boundary faces of the antireflection coating is minimal for light beams emerging from the active layer at all angles for a wavelength in the spectral region of the emission spectrum, or for which the integral reflectivity is at most 25 percent higher than the minimum.

## SUMMARY

The underlying problem is solved by an electro-optic assembly and an anti-reflective electrode having the features of the independent claims. Additional embodiments are defined in the dependent claims. According to an aspect, an electro-optic assembly comprises a first partially reflective, partially transmissive substrate having a first surface and a second surface, the first substrate further having a refractive index $RI_{SUB}$ ; a second partially reflective, partially transmissive substrate having a third surface and a fourth surface; a sealing member disposed about a perimeter of the first and second substrates, the sealing member holding the first and second substrates in a spaced-apart relationship; a chamber defined by the first and second substrates and the sealing member; an electro-optic medium disposed within the chamber; and an anti-reflective electrode (ARE) coating disposed on at least one of the second surface of the first substrate and the third surface of the second substrate, the anti-reflective coating comprising at least a first layer, a second layer, and a third layer. The second layer may be disposed between the first and third layers. The first layer may be disposed between the second surface of the first substrate or the third surface of the second substrate and the second layer. The third layer may be disposed between the second layer and the electro-optic medium. The first layer may be the layer adjacent to the first substrate and the third layer may be adjacent to the electro optic material. The anti-reflective coating is a conductive coating and functions as an electrode for the electro-optic assembly. The first layer of the anti-reflective coating have a refractive index $RI_1$; wherein the refractive index of the first substrate is less than the refractive index of the first layer of the anti-reflective coating which is less than the refractive index of the transparent conductive oxide in the second layer $RI_{TCO}$ ; i.e.:

$$RI_{SUB} < RI_1 < RI_{TCO}.$$

The second layer of the ARE coating comprises a transparent conductive oxide. The first layer may be disposed between the first substrate and the second layer, and the third layer may be disposed between the second layer and the electro-optic medium. In some embodiments,

$$RI_1 = \sqrt{RI_{TCO} * RI_{SUB}} .$$

The third layer of the anti-reflective coating may have a refractive index $RI_3$;

$$RI_3 = \sqrt{RI_{TCO} * RI_{EO}} .$$

The first layer may comprise at least one of a metal oxide, metal nitride or non-metal such as Silicon or Germanium, or oxides of non-metals like silicon dioxide (SiO2), or metal fluorides like magnesium flouride (MgF), in particular it may comprise a material with a lower refractive index and a material with higher index, both with low or no absorption in the operating wavelength range. The third layer may comprise a material with a lower refractive index than the refractive index of the transparent conducting oxide, such as an electrically conducting or insulating material, and a layer of a transparent conducting oxide. Examples of low refractive index materials may comprise silicon dioxide, magnesium fluoride, or CaAlOx. The third layer comprises an electrically leaky insulator such as perforated or porous silicon dioxide with openings or holes going through the insulating material to allow a flow of electrical current from the second layer to the EA medium through openings in the insulating structure.

The electro-optic assembly further may comprise a transflector coating disposed on the first surface of the first substrate; and the ARE coating may be disposed between the electro-optic medium and the second surface of the first substrate. The electro-optic assembly may comprise a transflector coating disposed on the second surface of the first substrate; and the anti-reflective coating may be disposed on the third surface of the second substrate. The electro-optic assembly may comprise a transflector coating disposed on the third surface of the second substrate and the anti-reflective coating disposed between the electro-optic medium and the second surface of the first substrate.

The first layer may comprise a plurality of sub-layers extending generally parallel to the second layer; and each sub-layer may comprise a different material than the adjacent sub-layers. The third layer may comprise a plurality of sub-layers extending generally parallel to the second layer; and each sub-layer may comprise a different material than the adjacent sub-layers. The first layer may comprise a material having a gradient refractive index. The third layer may comprise a material having a gradient refractive index. The optical thicknesses of the first and third layers may be about one fourth of the nominal operating wavelength of the device. The optical thickness corresponds to the product of the physical layer thickness multiplied by the corresponding refractive index for the operating wavelength inside the medium for each layer. For the case of devices operating in the visible spectral range the operating wavelength may be about 550 nm. The electro-optic assembly may comprise a field effect device; and the third layer of the anti-reflective coating may be at least one of non-conductive and non-porous. The reflectance of the electro-optic assembly may be one of CIE Y, average reflectance of the component layers, and weighted reflectance of the component layers. The anti-reflective electrode may be in electrical communication with the second layer. The electrical communication may be through an electrically conducting medium. The reflectance of the electro-optic assembly may be less than 1.0%. The electro-optic assembly may be configured to allow an electrical connection to the second layer of the anti-reflective electrode coating by electrically connecting a conducting medium to the second layer and where a portion of the third layer has been removed to expose the second layer.

According to another aspect, an anti-reflective electrode comprises a first layer having a refractive index $RI_1$; a second layer comprises a transparent conductive oxide; and a third layer having a refractive index $RI_3$; the anti-reflective electrode is configured to be disposed between a substrate and an electro-optic medium with the first layer adjacent to the substrate and the third layer adjacent to the electro-optic medium.

$$RI_{TCO} < RI_1 < RI_{SUB};\text{ and}$$

$$RI_{TCO} < RI_3 < RI_{EO}$$

where $RI_{TCO}$ is the refractive index of the transparent conductive oxide in second layer, $RI_{SUB}$ is the refractive index of the substrate, and $RI_{EO}$ is the refractive index of the electro-optic medium. In some embodiments, $RI_1 = \sqrt{RI_{TCO} * RI_{SUB}}$ . In some embodiments, $RI_3 = \sqrt{RI_{TCO} * RI_{EO}}$ .

The capability of the anti-reflective electrode to vary the thickness of the transparent conducting oxide without significantly increasing reflectance enables a wide range of sheet resistances varying from over 1000 ohms/sq to about 0.1 ohms/sq. In some embodiments, the sheet resistance may range from 200 ohms/sq to less than 0.5 ohm/sq. The third layer comprises an electrically leaky insulating layer with a low refractive index such as silicon dioxide that comprises extra openings or pores that allow electron movement from the transparent conductor to the optically active medium or vice versa. The first layer may comprise a plurality of sub-layers, and each sub-layer may comprise a different material from adjacent layers. The third layer may comprise a plurality of sub-layers, and each sub-layer may comprise a different material from adjacent layers. The first layer may comprise a material having a gradient refractive index with the refractive index either ascending or descending from a first side of the first layer to a second side of the first layer. The third layer may comprise a material having a gradient refractive index with the refractive index either ascending or descending from a first side of the third layer to a second side of the third layer. The anti-reflective coating may be disposed on a surface of an electro-optic device. The anti-reflective coating may be disposed between a substrate and an electro-optic medium of the electro-optic device. The electrical connection to the anti-reflective electrode may be performed by electrically connecting an electrically conducting medium for example, wire, a busbar, or a conductive epoxy to the second layer. This may be achieved by masking of the third layer in the area of electrical contact or by removing the third layer via etch or other removal method. The reflectance of the anti-reflective coating may be less than 1.0%. The reflectance of the anti-reflective coating may be at least one of CIE Y, the average reflectance, and the weighted reflectance of the components.

## BRIEF DESCRIPTION OF THE DRAWINGS

FIG. 1A is a schematic cross-sectional side view of one configuration of an anti-reflective electrode on an electro-optic device of the present disclosure;

FIG. 1B is a schematic cross-sectional side view of another configuration of an anti-reflective electrode on an electro-optic device of the present disclosure;

FIG. 1C is a schematic cross-sectional side view of another configuration of an anti-reflective electrode on an electro-optic device of the present disclosure;

FIG. 2 is a schematic cross-sectional side view of an embodiment of an anti-reflective electrode of the present disclosure;

FIG. 3 is a schematic cross-sectional side view of another embodiment of an anti-reflective electrode of the present disclosure;

FIG. 4 is a schematic cross-sectional side view of yet another embodiment of an anti-reflective electrode of the present disclosure;

FIG. 5 illustrates the relationship between sheet resistance and thickness for different transparent conductive oxide layers with different bulk resistivity values;

FIG. 6 illustrates the reflectance spectra for examples 1 - 4, as described in Table 1;

FIG. 7 illustrates a first embodiment of a switchable mirror comprising an anti-reflective coating in accordance with the present disclosure;

FIG. 8 illustrates another embodiment of a switchable mirror comprising an anti-reflective coating in accordance with the present disclosure; and

FIG. 9 is a schematic cross-sectional side view of another configuration of an anti-reflective electrode on an electro-optic device of the present disclosure.

## DETAILED DESCRIPTION

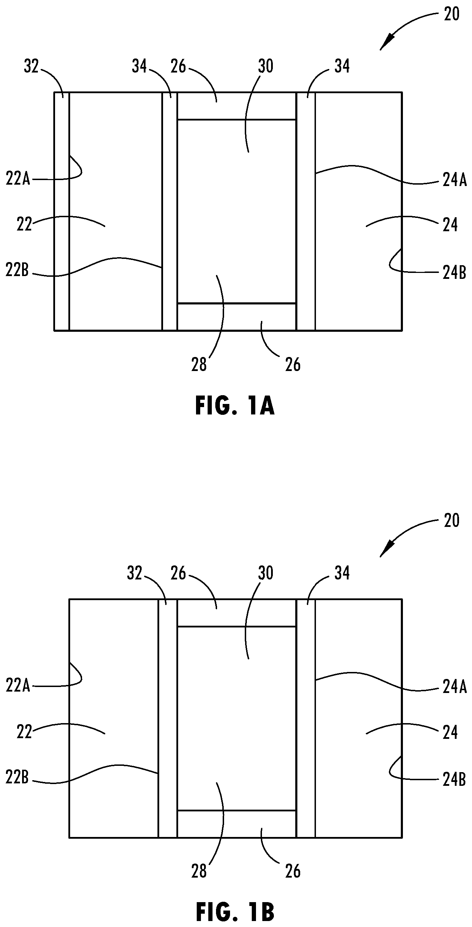

In some embodiments, heads up displays may comprise a display element and a projector configured to project information onto the display element. Display element may comprise a reflective surface on which the projected images may be displayed. FIGS. 1A-4 illustrate side views of different embodiments of the display element of a heads up display (HUD). The display element may comprise an anti-reflective coating as described herein.

In some embodiments, as shown in FIGS. 1A and 1B, the display element may comprise an electro-optic (EO) element, shown generally at 20, to improve the visibility of the information displayed. EO element 20 may comprise a first partially reflective, partially transmissive substrate 22 having a first surface 22A and a second surface 22B and a second partially reflective, partially transmissive substrate 24 having a third surface 24A and a fourth surface 24B. Second substrate 24 may be disposed generally parallel to first substrate 22, and second surface 22B of first substrate 22 may be opposed to third surface 24A of second substrate 24. A sealing member 26 may extend between first and second substrates 22, 24 along a perimeter portion of first and second substrates 22, 24. A cavity 28 may be defined between first and second substrates 22, 24, and sealing member 26 may define the sidewalls of cavity 28. In some embodiments, an EO medium 30 may be disposed within cavity 28. EO medium 30 may comprise an electrochromic medium. In some embodiments, EO element 20 may rely on a relatively large current flow to function optimally, and may function well with low sheet resistance electrodes.

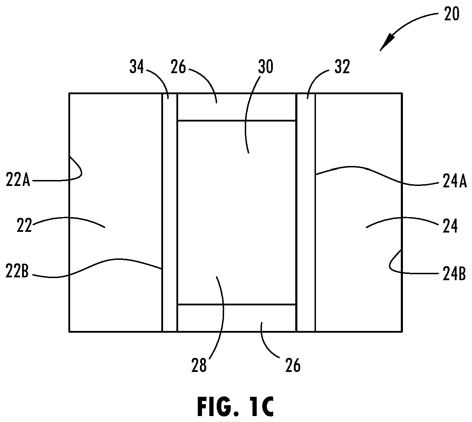

First substrate 22 may be configured to be the substrate closest to a viewer of the HUD. In some embodiments, a transflector coating 32 having a fixed reflectance may be disposed on first surface 22A of first substrate 22, as shown in FIG. 1A. In some embodiments, transflector coating 32 may function as a reflective surface for the display element. In some embodiments, as shown in FIG. 1B, transflector coating 32 may be disposed on second surface 22B of first substrate 22, and transflector coating 32 may function both as a first electrode for EO element 20 and as a reflective surface for the display element. In some electro-optic elements, such as an electro-optic mirror as shown in FIG. 1C, transflector coating 32 or an opaque mirror reflector electrode (not shown) may be disposed on third surface 24A of second substrate 24.

The reflectance from transflector coating 32 may be the only reflectance desired for the display element of the HUD. However, unwanted reflections may appear on other surfaces of the device. Thus, for example, if transflector coating 32 is disposed on second surface 22B of first substrate 22, unwanted reflections may appear on third surface 24A of second substrate 24 or on other surfaces of display element. The unwanted reflections may cause double images to appear or may otherwise hinder the visibility of the desired image. Thus, it may be desirable to reduce or eliminate unwanted reflections from appearing on surfaces of the display element of the HUD. For example, when applying transflector coating 32 to first surface 22A of first substrate 22, applying suitable anti-reflection coatings that also function as electrodes to second surface 22B of first substrate 22 and third surface 24A of second substrate 24 may reduce or eliminate the unwanted reflections while allowing electro-optic element 20 to function as intended. Similarly, in another example, when applying transflector coatings 32 to second surface 22B of first substrate 22, applying suitable anti-reflection coatings that also function as electrodes to third surface 24A of second substrate 24 may reduce or eliminate the unwanted reflections while allowing the functionality of electro-optic element 20.

Currently, to reduce or eliminate unwanted reflections, some HUD display elements comprise a low-reflectance or an anti-reflectance coating on at least one surface. In some configurations, the display element of the HUD may have a reflective coating on one surface and a low-reflectance or an anti-reflectance coating on a different surface. In some current electro-optic or electrochromic HUDs, the low reflectance or anti-reflectance coating may comprise electrodes on at least one of second surface 22B of first substrate 22 and third surface 24A of second substrate 24. The low reflectance or anti-reflectance coating may further comprise a silver coating. Since silver is highly conductive, the low-reflectance or anti-reflectance silver coating may also function as an electrode for EO element 20. However, in some applications, the silver electrode may be quite thin in order to achieve the necessary anti-reflection properties. Low sheet resistance values may be desirable, and thin silver electrodes may limit the attainment of the low sheet resistance values.

To attain low sheet resistance values while still providing the desired optical properties, an anti-reflective electrode (ARE) coating 34 may be disposed on at least one of second surface 22B of first substrate 22 and third surface 24A of second substrate 24 of EO element 20. ARE coating 34 may reduce or eliminate undesired reflections on the surface on which ARE coating 34 is located. ARE coating 34 is a conductive layer and functions as an electrode for EO element 20.

The surface on which ARE coating 34 is deposited may be a surface that may benefit from a low reflectance transparent electrode. In some embodiments, such as, for example, an electro-optic or electrochromic mirror, ARE coating 34 may be disposed on a surface opposite transflector coating 32 across EO medium 30. For example, transflector coating 32 may be disposed on first surface 22A of first substrate 22 and ARE coating 32 may be disposed between the EO medium 30 and second surface 22A of first substrate 22 as shown in FIG. 1A. In another example, transflector coating 32 may be disposed on second surface 22B of first substrate 22 and ARE coating 34 may be disposed on third surface of second substrate as shown in FIG. 1B. In yet another example, in some embodiments, transflector coating 32 may be disposed on third surface 24A of second substrate 24 and ARE coating 34 may be disposed on second surface 22B of first substrate 22 between first substrate 22 and EO medium 30 as shown in FIG. 1C. In this embodiment, the dynamic range of the device will be increased by reducing the reflectance from surface 22B. It should be understood for this particular embodiment, an opaque mirror reflector electrode may be used instead of a transflector coating and still be within the contemplated scope of the disclosure. For electro-optic HUD devices having fixed reflectance, transflector coating 32 may be disposed on one of first and second surfaces 22A, 22B of first substrate 22. In the embodiment when the transflector is on surface 22B, the ARE coating 34 may be disposed on third surface 24A of second substrate 24 as shown in FIG. 1B. In an alternate embodiment, transflector coating 32 may be disposed on first surfaces 22A of first substrate 22 and ARE coating 34 may be disposed on second surface 22B of the first substrate 22 and/or the third surface 24A of the second substrate 24 as shown in FIG. 1A.

In some embodiments, electro-optic element 20 may comprise a liquid crystal element. EO medium 30 may then comprise a liquid crystal material, suspended particles, or another electro-active material. Depending on the functional goal of the device, the transflector coating 32 may be disposed on any of first, second, third or fourth surfaces 22A, 22B, 24A or 24B. The ARE coating 34 may be disposed on second surface 22B of first substrate 22 and/or third surface 24A of second substrate 24, and between electro-active material 30 and one of first and second substrate 22, 24.

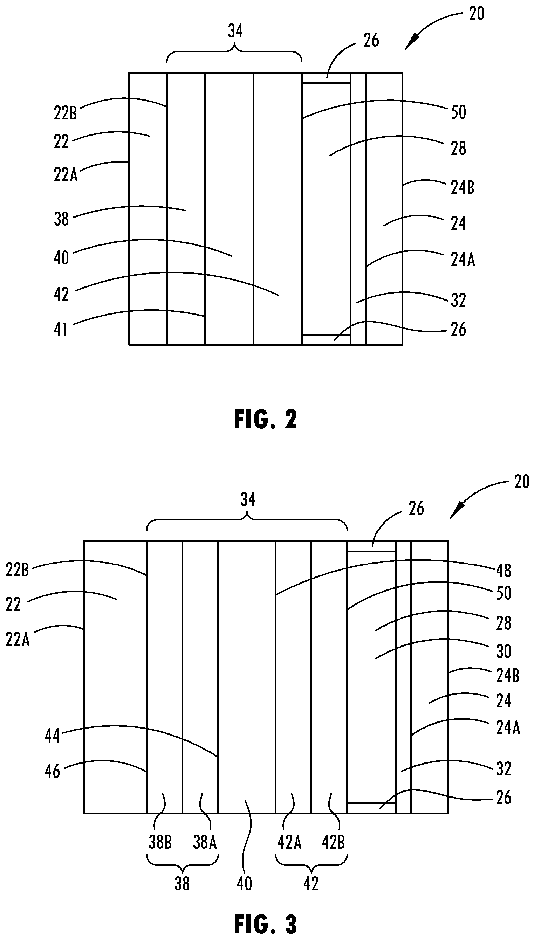

ARE coating 34 may comprise a plurality of layers. In some embodiments, ARE coating 34 may comprise three layers as shown in FIG. 2, but more layers may be used. In some embodiments, ARE coating 34 may comprise a second layer 40 disposed between a first layer 38 and a third layer 42. In some embodiments, third layer 42 may be in contact with EO medium 30. In some embodiments, third layer 42 may be in contact with another electro-active material.

In some embodiments, the electrical connection to the anti-reflective electrode 34 may be performed by electrically connecting an electrically conducting medium for example, wire, a busbar, or a conductive epoxy to second layer 40. This may be achieved by masking of third layer 42 in the area of electrical contact or by removing third layer 42 via etch or other removal method. This optional electrical connection method may result in improved contact resistance between the electrical conducting medium and the main conductor layer in the ARE coating.

Second layer may 40 comprise a transparent conductive oxide (TCO). Using a TCO allows the ARE coating 34 to function as an electrode. TCO materials conduct electricity while being transparent to visible light. In some embodiments, the transparent conductive oxide material may comprise, for example, indium tin oxide (ITO), fluorine-doped tin oxide (F:SnO2), doped zinc oxide, indium zinc oxide (IZO), or the like.

In some embodiments, the layers of the ARE coating 34 may need to be tuned with respect to the refractive index of the electro-optic material used in EO element 20 and the refractive index of the second layer, i.e., the transparent conducting oxide. It may be understood that the refractive index may be a wavelength dependent property and one should design according to the operational wavelength of the final application. For example, for a device to be operating as an antireflective electrode at 550 nm, the refractive index and optical thicknesses need to be adjusted to that particular operating wavelength. The first and third layers of the ARE coating 34 may be tuned by adjusting the properties, such as the choice of material used in the layer, the refractive index of the material, and/or the number and composition of layers and/or sub-layers. The materials selected may be chemically compatible with one another, and may have stability, high durability, low optical absorption, low stress, good adhesion, and low thermal mismatch. It may be understood that the refractive index may be a wavelength dependent property and one should design according to the operational wavelength of the final application. For example, for a device to be operating as an antireflective electrode at 550 nm, the refractive index and optical thicknesses need to be adjusted to that particular operating wavelength.

In some embodiments, first layer 38 of ARE coating 34 may function to reduce or eliminate reflections from the interface between second layer 40 and the surface upon which it is deposited. First layer 38 may comprise at least one of a material having a fixed refractive index, a layer of a material having a gradient refractive index, and two or more sub-layers, each sub-layer having a different refractive index. Referring to FIG. 3, in embodiments in which first layer 38 comprises a material having a gradient refractive index, the refractive index may ascend or descend from a first surface 44 of first layer 38 to a second surface 46 of first layer 38. First surface 44 of first layer 38 may have a refractive index approximately equal to the refractive index of second layer 40. Second surface 46 of first layer 38 may have a refractive index approximately equal to the refractive index of first substrate. First layer 38 may comprise at least one of a metal oxide, metal nitride, non-metal, oxides of non-metals, or metal fluorides. In particular, first layer 38 may comprise a material with a lower refractive index and a material with higher index, both with low or no absorption in the operating wavelength range. For example, first layer may comprise at least one of Silicon, Germanium, silicon dioxide (SiO2), or magnesium flouride (MgF).

Similarly, in some embodiments, third layer 42 may function to reduce or eliminate reflections from the interface between second layer 40 and electro-optic medium 30. Third layer 42 may comprise at least one of a material having a fixed refractive index, a material having a gradient refractive index, and two or more sub-layers, each sub-layer having a different refractive index. Similar to first layer 38, in embodiments in which third layer 42 comprises a material having a gradient refractive index, the refractive index may ascend or descend from a first side 48 of third layer 42 to a second surface 50 of third layer 42. First surface 48 of third layer 42 may have a refractive index approximately equal to the refractive index of second layer 40. Second side 50 of third layer 42 may have a refractive index approximately equal to the refractive index of EO medium 30.

Third layer 42 may comprise a mixture of the material comprising layer 40 and adjacent EO medium 30. This can be achieved by utilizing a "moth-eye-like" structure by creating a textured surface on second layer 40. The "moth-eye-like" structure is characterized by having a monotically decreasing refractive index transition from the higher refractive index of second layer 40 to the lower refractive index of EO medium 30. This can be achieved by subtractive methods such as, for example, etching the surface of second layer 40, or by additive methods such as, for example, depositing particles of an electrically conductive material with similar refractive index (within 0.4). In either case, the dimensions of the etched features or added particles may be in a range smaller or similar than a factor of 2 of the wavelength being anti-reflected. For example, for a wavelength of 550 nm, the dimensions of the textured moth-eye-like structure may be about 1100 nm or smaller. An advantage of a "moth-eye-like" structure is the capability of generating a broad band antireflection spectrum as well as having a direct electrical contact between the electrically conducting material layer 40 and the electrooptically active medium.

In embodiments in which first layer 38 comprises a material having a fixed refractive index, the desired refractive index may be determined using the following formula:

$$RI_{SUB} < RI_1 < RI_{TCO} \qquad \text{(Equation 1)}$$

where $RI_1$ is the desired refractive index of first layer 38, $RI_{TCO}$ is the refractive index of the transparent conductive oxide in second layer 40, and $RI_{SUB}$ is the refractive index of first substrate 22. When first layer 38 has a fixed refractive index, the thickness of first layer 38 may be about a quarter wave optical thickness; i.e., the thickness equals one fourth of the refractive index of the design wavelength where the design wavelength is the wavelength of light which is intended to be used. The design wavelength, for visible anti-reflection applications, is selected from within the range of about 400 to 700 nm. It is understood that the thickness may be varied so that the overall reflectance goals of a given application are met. Furthermore, if anti-reflection properties are needed outside the visible spectra such as UV or NIR, then the design wavelength used should correspond to the wavelength that needs to be anti-reflected. In some cases:

$$RI_1 = \sqrt{RI_{TCO} * RI_{SUB}}$$

In embodiments in which third layer 42 comprises a material having a fixed refractive index, the desired refractive index of third layer 42 may be determined using the following formula:

$$RI_{EO} < RI_3 < RI_{TCO} \qquad \text{(Equation 2)}$$

where $RI_3$ is the desired refractive index of third layer 42, $RI_{TCO}$ is the refractive index of the transparent conductive oxide in second layer 40, and $RI_{EO}$ is the refractive index of electro-optic medium 30. When third layer 42 has a fixed refractive index, the thickness of third layer 42 may have an optical thickness of about one fourth of the wavelength of light as described above. The absolute reflectance of the coated surface may be below about 2%. A suitable material for third layer 42 may be CaAlOx. In some embodiments,

$$RI_3 = \sqrt{RI_{TCO} * RI_{EO}}.$$

Referring again to FIG. 3, in some embodiments, at least one of first and third layers 38, 42 may comprise a bi-layer. First layer 38 may comprise a bilayer comprising a first sub-layer 38A disposed adjacent to second layer 40 and a second sub-layer 38B disposed between first sub-layer 38A and first substrate 22 adjacent to first sub-layer 38A. First sub-layer 38A may have a first refractive index $RI_1$, and second sub-layer 38B may have a second refractive index $RI_2$ different from the first refractive index $RI_1$. Each of first and second sub-layers 38A, 38B may have a thickness $T_1$ and $T_2$ respectively. The effective optical thickness should be approximate a quarter wave thickness as described above. A weighted average refractive index of bi-layer 38 may be calculated, with the refractive index of each of first and second sub-layers 38A, 38B multiplied by the fraction that the sub-layer contributes to the total thickness of first layer 38 as in equation 3:

$$RI_{w38} = \frac{T_1 * RI_1}{T_{T38}} + \frac{T_2 * RI_2}{T_{T38}} \qquad \text{(Equation 3)}$$

wherein $RI_{w38}$ is the weighted average refractive index of first layer 38, and $T_{T38}$ is the total thickness of first layer 38. The refractive index of second sub-layer 38B of first layer 38 may be greater than about 1.7 or greater than about 2.0. The refractive index of first sub-layer 38A of first layer 38 may be less than about 1.6 or less than about 1.5. The weighted average refractive index of second layer 38 should meet the requirements of Equation 3 above.

Similarly, third layer 42 may comprise a bi-layer comprising a third sub-layer 42A disposed adjacent to second layer 40 and a fourth sub-layer 42B disposed between third sub-layer 42A and the electro optic media 30 and adjacent to third sub-layer 42A. Third sub-layer 42A may have a third refractive index $RI_3$, and fourth sub-layer 42B may have a fourth refractive index $RI_4$ different from third refractive index $RI_3$. Each of third and fourth sub-layers 42A, 42B may have a thickness $T_3$ and $T_4$ respectively. Similarly, a weighted average refractive index of bi-layer 42 may be calculated, with the refractive index of each of third and fourth sub-layers 42A, 42B multiplied by the fraction that the sub-layer contributes to the total thickness of first layer 38 as in equation 4:

$$RI_{w42} = \frac{T_3 * RI_3}{T_{T42}} + \frac{T_4 * RI_4}{T_{T42}} \qquad \text{(Equation 4)}$$

wherein $RI_{w42}$ is the weighted average refractive index of third layer 42, and $T_{T42}$ is the total thickness of third layer 42. The refractive index of fourth sub-layer 42B of second layer 42 may be greater than about 1.7 or greater than about 2.0. The refractive index of third sub-layer 42A of third layer 42 may be less than about 1.6 or less than about 1.5. The weighted average refractive index of second layer 42 should meet the requirements of Equation 4 above. The total thickness of the bi-layer may be approximately a quarter wave optical thickness. For example, the thickness is one fourth of the design wavelength. It should be understood that the equations described herein enable anti-reflection electrodes to be designed to meet the needs of different applications. Those skilled in the art will also recognize that the layer thicknesses and refractive index may be optimized around these starting points to enable simultaneous optimization of different design constraints such as broadband reflectance targets, color, performance at angle, etc. and still be within the scope of the disclosure.

First layer 38 and/or third layer 42 may comprise more than two sub-layers as shown in example 7 of table 1. The weighted average refractive index of first layer 38 and/or third layer 42 comprising $n$ sub-layers may be calculated by the following formula:

$$RI'_w = \frac{T'_1 * RI'_1}{T'_T} + \frac{T'_2 * RI'_2}{T'_T} + \dots + \frac{T'_n * RI'_n}{T'_T} \qquad \text{(Equation 4)}$$

where $RI'_w$ is the weighted average refractive index, $RI'_1$ is the refractive index of first or third sub-layer 38A, 42A, $RI'_2$ is the refractive index of second or fourth sub-layer 38B, 42B, $RI_n$ is the refractive index of the nth sub-layer 38N, 42N, $T'_1$ is the thickness of first or third sub-layer 38A, 42A, $T'_2$ is the thickness of second or fourth sub-layer 38B, 42B, $T'_n$ is the thickness of the nth sub-layer 38N, 42N, and $T'_T$ is the total thickness of first or third layer 38, 42.

In some embodiments, second layer 40 may comprise a rough or textured surface. The rough or textured surface may have a refractive index that is between the refractive index of layer 40 and the refractive index of electro optic media 30. The thickness of the material from layer 40 may be adjusted such that the weighted refractive index meets the requirements of Equation 2.

Different applications, such as electro-optic elements or liquid crystal elements, may have different constraints or requirements in relation to sheet resistance or conductivity of the transparent conductive oxide 40. Electrochromic materials rely on relatively large current flow to function optimally while liquid crystal elements are field effect devices and have less stringent needs from a sheet resistance perspective. Thus, electrochromic elements may function well with low sheet resistance, but liquid crystals may function adequately with higher sheet resistance for the transparent electrodes.

Transparent conductive oxides may have less intrinsic conductivity than some commonly used electrodes that contain materials such as silver. For this reason, the transparent conductive oxide layer 40 may need to be thicker than a silver-based electrode layer in order to have the same sheet resistance. The transparent conductive oxide layer 40 has different optical properties than silver. The TCO typically has a low extinction coefficient of less than 0.1 and a relatively high refractive index in the range of 1.7 and 2.5, commonly between about 1.8 and 2.05. In comparison, silver or silver alloys have a real index (n) that is less than about 0.40 (in the visible spectra) and an imaginary index greater than about 2.

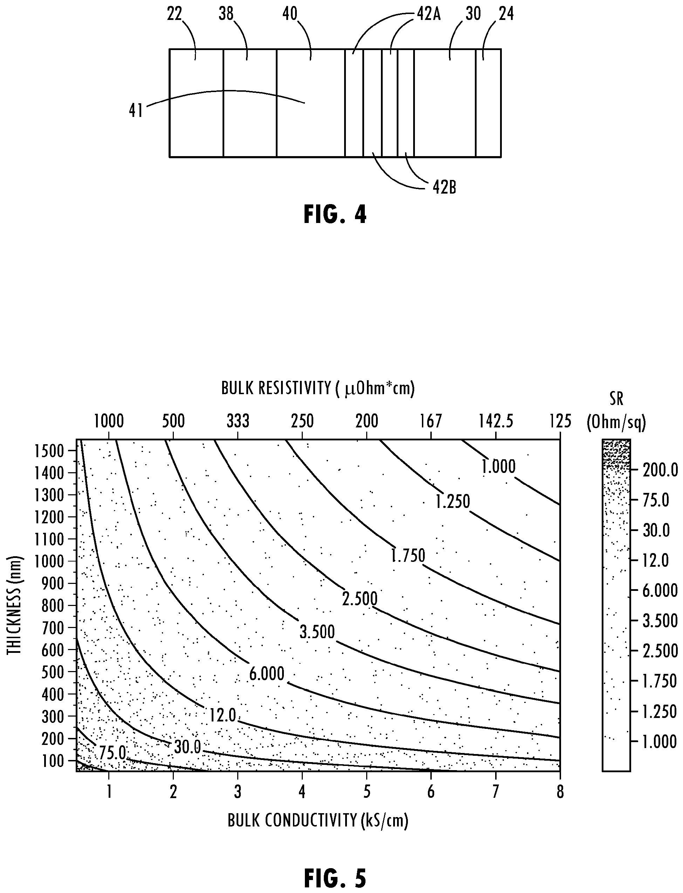

In some embodiments, the sheet resistance of ARE coating 34 may be tunable by adjusting the properties of second layer 40. For example, FIG. 5 illustrates the relationship between sheet resistance and thickness for different TCO layers 40 with different bulk resistivity values. FIG. 5 can be used as a guide for selecting the thickness and bulk resistivity and/or conductivity values needed to attain the required sheet resistance for a given application. ARE coatings 34 taught herein may have low sheet resistance over a range of sheet resistance values such as, for example, those shown in FIG. 5. The capability of the anti-reflective electrode to vary the thickness of the transparent conducting oxide without significantly increasing reflectance enables a wide range of sheet resistances varying from over 1000 ohms/sq to about 0.1 ohms/sq. The sheet resistance may be greater than about 100, 250, 500, or 1000 ohm/sq for applications such as field effect devices or less than about 100, 50, 20, 10, 5, or 2 ohms/sq for current based devices.

Anti-reflective coating 34 may be disposed between a substrate 22, 24 and electro-optic medium 30. The electrical connection to ARE 34 may be performed by electrically connecting an electrically conducting medium for example, a wire, a busbar, or a conductive epoxy (not shown) to second layer 40. This may be achieved by masking of third layer 42 in the area of electrical contact or by removing third layer 42 via etching, ablation, or other removal method. The reflectance of anti-reflective coating may be less than 1.0%. The reflectance of anti-reflective coating may be at least one of CIE Y, the average reflectance, and the weighted reflectance of the components.

Examples:

In some embodiments, third layer 42 may comprise a third sub-layer of a first material such as silicon dioxide (SiO2) 42A and a fourth sub-layer of a second material (42B) such as indium tin oxide (ITO) or niobium oxide. In some embodiments, third layer 42 may comprise more than one third sub-layer 42A of a first material and more than one fourth sub-layer 42B of a second material as shown in FIG. 4. In some embodiments, the third sub-layers 42A of first material may alternate with the fourth sub-layers 42B of second material. Fourth sub-layer 42B of the second material may be closest to chamber and EO medium 30. Third sub-layer 42A of first material may be closest to second layer 40. In some alternate embodiments, third sub-layer 42A may be adjacent to the electro optic medium 30.

In some embodiments third sub-layer or sub-layers 42A of the first material in third layer 42 comprise an electrically leaky silicon dioxide (SiO2) or other low refractive index material. Leaky silicon dioxide comprises extra openings or pores that allow easier electron movement from the transparent conductor to the optically active medium or vice versa due to porosity in its microstructure. Current may go through leaky silicon dioxide better than through standard SiO2.

In some embodiments, second layer 40 may comprise a TCO such as indium tin oxide (ITO), fluorine-doped tin oxide (F:SnO2), doped zinc oxide, indium zinc oxide (IZO), or the like. Second layer 40 may range in thickness from less than 10 nm to over 1500 nm.

In some embodiments, for example, first layer 38 may comprise a first sub-layer 38A of silicon dioxide and a second sub-layer 38B of either niobium oxide or Indium Tin Oxide (ITO). It is understood that other low and high refractive index materials may be used and the disclosure is not limited to these particular materials.

Table 1 illustrates the relationship between sheet resistance and sheet thickness for different AREs having different first, second, and third layers 38, 40, 42 with layer 40 having different thickness values and resultant sheet resistance values which include the contributions of all of the conductive layers present in the stack. Examples of AREs with different first and third layers 38 and 42 are shown. Table 1 also includes two examples (numbers 1 and 2) of systems comprising ITO electrodes, which systems do not have first and third layers 38, 42 as examples of existing art. The integrated reflectance, Yr, reflected color a*r, b*r, integrated transmittance Yt, transmitted color a*t, b*t, optical absorption A, and sheet resistance SR for different constructions, including different configurations and make-ups of first and third layers 38, 42 and different thicknesses for second layer 40 are shown. The reflectance, transmittance, and colors are in the CIE color system using a D65 illuminant and 10 degree observer. In the examples in Table 1, the layers shown are, in order, first substrate 22, first layer 38, second layer 40, third layer 42, and electro-optic medium 30. The optical parameters are calculated for a normal angle of incidence, and the reflected parameters are calculated for the light incident from the side of the system closest to first substrate 22. The optical parameters are restricted to those of the interface comprising the substrate, ARE coating 34, and electro optic media. Reflectance contributions from other interfaces are omitted for clarity.

Table 1: ARE optical and electrical performance for different electrode constructions at a substrate-electro-optic medium interface

| No. | First Layer (38) (nm) | Second Layer (40) (nm) | Third Layer (42) (nm) | Yr (%) | a*r | B*r | Yt (%) | a*t | B*t | A (%) | SR (Ohm /sq) |
|---|---|---|---|---|---|---|---|---|---|---|---|
| 1 | 0 | ITO 150 | 0 | 0.62 | 21.60 | -32.10 | 97.70 | -1.22 | 2.18 | 1.69 | 11.1 |
| 2 | 0 | ITO 220 | 0 | 3.43 | -18.60 | 18.20 | 94.19 | 1.39 | -1.79 | 2.38 | 7.6 |
| 3 | Nb205 6.2/SiO2 33.8 | ITO 150 | SiO2 39.74/ITO 16.5 | 0.01 | 0.90 | -1.40 | 98.04 | -0.32 | -0.15 | 1.95 | 10 |
| 4 | Nb205 9.8/SiO2 32.2 | ITO 220 | SiO2 31.6/ITO 23.1 | 0.07 | 7.90 | -12.80 | 97.17 | -0.73 | 0.23 | 2.76 | 6.8 |
| 5 | Nb205 8.8/SiO2 32.6 | ITO 1650 | SiO2 33.9/ITO 22.2 | 0.07 | 4.2 | -7.13 | 83.23 | -2.60 | -2.10 | 16.70 | 1.0 |
| 6 | Nb205 3.0/SiO2 59.4 | ITO 15 | SiO2 71.7/ITO 7.2 | 0.01 | 0.07 | -0.15 | 99.53 | -0.06 | 0.03 | 0.46 | 110 |
| 7 | Nb205 9.0/SiO2 27.4 | ITO 220 | SiO2 28 /ITO 7/ SiO2 9/ITO 26 | 0.30 | 3.10 | -3.14 | 96.89 | -0.53 | -0.22 | 2.81 | 6.6 |
| 8 | TiSiO2 76.9 | ITO 220 | SiO2 31.0/ITO 21.7 | 0.08 | 6.20 | -8.35 | 97.20 | -0.66 | 0.02 | 2.71 | 6.9 |
| 9 | TiSiO2 76.9 | ITO 220 | ITO graded roughness | 0.06 | 0.70 | -1.63 | 96.21 | -0.59 | -0.45 | 3.73 | 6.9 |
| 10 | Nb205 8.4/SiO2 36.7 | ITO 150 | AZO 78.9 | 0.06 | 1.33 | -0.30 | 98.24 | -0.32 | -0.18 | 1.70 | 11.0 |

The reflectance values are independent of viewing direction and equivalent reflectance properties can be obtained from both directions. The columns in Table 1 for first layer, second layer, and third layer 38, 40, 42 indicate the composition of the respective layer and the thickness in nanometers of each of the component(s) of the layer.

In these examples, the electrode layer 40 was assumed to be made out of ITO and have a bulk resistivity of 167 micro ohm-cm for most examples. Example 6 has a bulk resistivity of 244 micro ohm-cm. The sheet resistance of the remaining layers was included to get an estimated sheet resistance for the entire ARE. The thickness parameters were calculated by optimizing the layer with the goal of minimizing the reflectance; however, one could attempt to minimize the absolute values of the reflected color parameters a*r and b*r as well. The results of the AREs in this table show that low reflectance and various sheet resistance values may be obtained, in contrast to the ITO electrodes without first and third layers 38, 42, as examples 1 and 2 show. The reflected color for ARE coatings has smaller a*r and b*r absolute values than the single layer examples of the existing art, indicating that the reflected light should have an acceptable neutral color reflection.

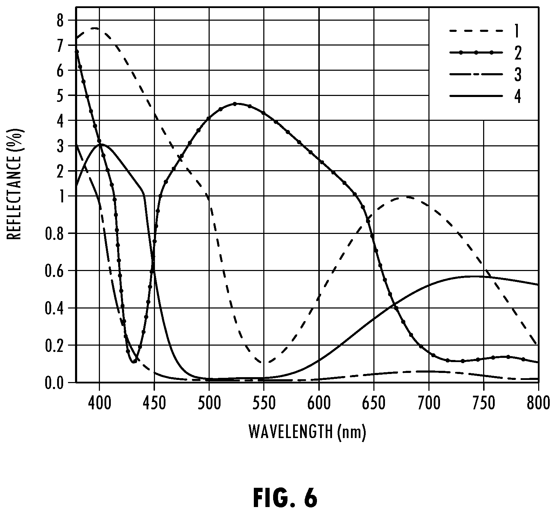

FIG. 6 shows the reflectance spectra for examples 1-4 of Table 1, where the ARE construction provides broad band anti-reflection properties compared to the reference coatings of the known art. The reflectance plots show the reflectance from the coated interface only. The reflectance plot shows that reflectance values of 2% or less are attainable for ARE while reference coatings may have significantly higher reflectance values. Reflectance values of less than 1%, and reflectance values below 0.8% are demonstrated. Reflectance values less than 0.5% or less than 0.25% or less than 0.10% are also attainable and, depending on the application, may be desirable. As noted above, in certain embodiments, the reflectance refers to the eye-weighted CIE Y reflectance. Alternatively, the reflectance may be a simple average of a given wavelength range such as 400 to 720 nm or a reflectance intensity over a given wavelength range normalized to the intensity versus wavelength for a particular light source. The reflectance targets may be selected from one or more of these options.

The different applications which would benefit from an anti-reflection electrode may vary in their need for current flow. For example, liquid crystal or suspended particle devices rely on the electrical potential to align or alter the alignment of the molecules to attain the different states of operation, and little to no current flow is needed. In contrast, electrochromic devices require current flow to function. The current will flow predominantly through the TCO layer from the electrical bus system but then needs to flow perpendicular to the TCO to get to the electrochromic media and activate a change in state. The vertical flow of electric current adds an additional requirement to the anti-reflection electrode. The average electrical conductivity (quantified by Siemens/cm, S/cm) of layer 42, which is the average of the conductivity of the sub-layers forming layer 42, should be greater than about 0.001 S/cm, or greater than about 1 S/cm, or greater than about 100 S/cm. One non-limiting way to achieve the necessary conductivity in third layer 42 to enable activation of electro-optic medium 30 is to make third and fourth sub-layers 42A, 42B, which may be inherently non-conductive, porous or have a reduced density. The porosity or reduced density may allow for electrons to flow between second layer 40 and electro-optic medium 30. For example, third layer 42 may comprise third sub-layer 42A of SiO2 and fourth sub-layer 42B of TCO. Fourth sub-layer 42B may be positioned next to electro-optic medium 30 and third sub-layer 42A may be disposed next to second layer 40. When third sub-layer layer 42A has reduced porosity ("leaky" SiO2), electric current can more easily flow, thereby enabling the activation of electro-optic medium 30. Alternatively, third layer 42 may comprise a plurality of alternating third and fourth sub-layers 42A, 42B of a dielectric material like SiO2 and a conductive material like ITO. The porosity may be quantified by the density of the layer which may be between about 75% and 100% of the bulk density, or may be between about 85 and 100% of the bulk density, or may be between about 90 and 98% of the bulk density.

In some embodiments, third layer 42 may comprise a host matrix with conductive nanoparticles embedded in the host matrix. The density of the conductive nanoparticles, their refractive index, and the refractive index of the host material may be selected to meet the refractive index requirements of equation 2.

In some embodiments, third layer 42 may comprise a graded refractive index with the refractive index transitioning from the refractive index of second layer 40 to the refractive index of electro-optic medium 30 by the use of a rough structure as shown in Table 1 example 9. For example, third layer 42 may comprise a graded layer of ITO where the porosity of the ITO increases towards the direction of the electro-optic medium, creating a graded refractive index. Other means to achieve the optical and electrical properties outlined herein are within the scope of this invention.

The transfer of electrons between third layer 42 and electro-optic medium 30 may be influenced by the work function of the material at the top of third layer 42. In some embodiments the flow of electrical current may be enhanced by positioning a thin layer of TCO at the top of third layer 42. TCO layer 40, combined with the balance of layer third layer 42 should be configured to achieve the desired reflectivity for a given application.

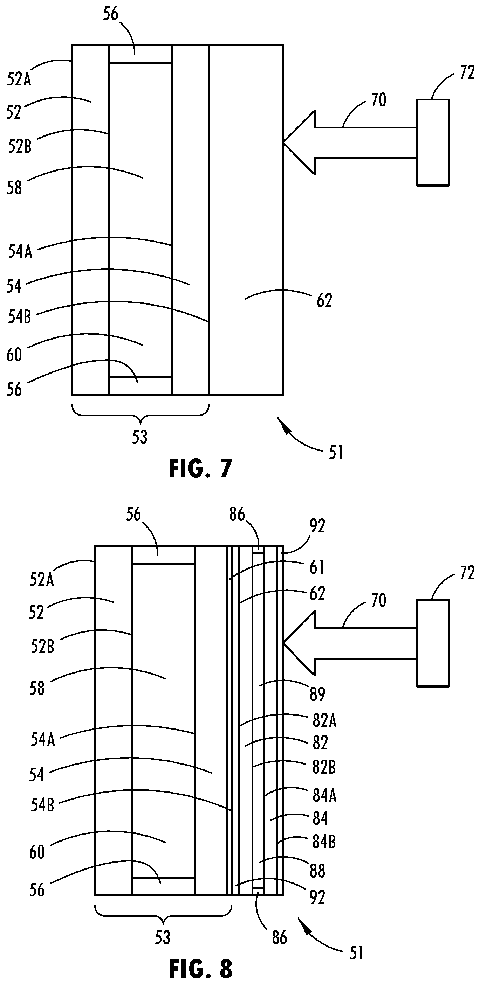

Similar to HUDs, switchable mirrors and other devices, especially devices having electro-optic elements comprising reflective electrodes, may benefit from having an ARE coating 34. For example, a switchable mirror 51, shown in FIG. 7, may comprise an electro-optic element 53. As discussed above, electro-optic element 53 may comprise substrates 52 and 54 bonded together with a sealing member 56 to form a chamber 58. Chamber 58 may contain electro-optic material 60. Incident light may be reflected off a first surface 52A of first substrate, a second surface 52B of first substrate, and a third surface 54A of second substrate. The desired reflectance comes from interface 54B where the switchable mirror 62 is located. Reflected light from the other interfaces may cause ghost images that may compete with light reflected from the interface 54B. Anti-reflection electrode coating 34 may be applied to at least one of second surface 52B of first substrate and third surface 54A of second substrate to mitigate the ghost image coming from the surface(s). For applications in the visible spectral range involving displays such as, for example, HUDs, switchable mirrors, and the like, it may be desirable that in addition to having a low reflectance that the reflectance of the anti-reflective electrodes be relatively color neutral, that is with a* and b* values between -20 and +20, or within -10 and +10 or within -5 and +5.

In another example, as shown in FIG. 8, in some embodiments, switchable mirror 51 may further comprise a first substrate 82 and a second substrate 84 that are held in a parallel configuration with a seal 86 around the perimeter, thereby defining a chamber 88. Chamber 88 may be filled with liquid crystal material 89, thereby forming a liquid crystal cell. A reflective polarizer 92 may be disposed adjacent to and rearward of the liquid crystal cell. Additionally or alternatively, reflective polarizer 92 may be positioned behind electro-optic element 53 or may be bonded directly to electro-optic element 53 using an adhesive layer 61.

First substrate 82 has a first surface 82A and a second surface 82B. Second substrate 84 has a third surface 84A and a fourth surface 84B. Adhesive layer 61 may be selected to have a comparable refractive index to substrates 54 and 82 which may result in practical elimination of the reflectance of these interfaces. Surfaces 82B and 84A may comprise transparent electrodes. As with the example above, light may reflect from the different interfaces. The reflectance may form ghost images. Applying anti-reflective electrode coating 34 to at least one of surfaces 82B, 84A may reduce or eliminate the appearance of ghost images.

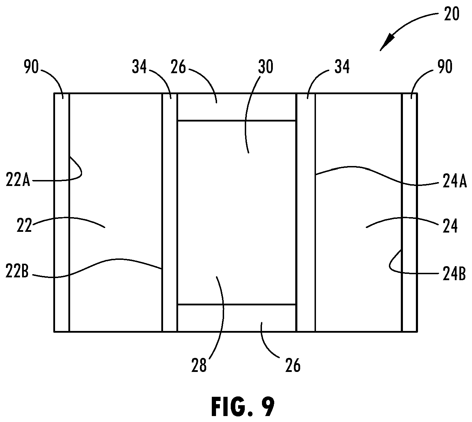

In yet another example, as shown in FIG. 9, a switchable window may comprise an EO element 20 located in the optical path between a light sensor array and other optical components forming the lens of the camera (not shown). The light sensor may comprise a digital camera sensor. The second and third surfaces 22B, 24A of the electro-optic element 20 may have antireflection electrode coatings 34 and the first and fourth surfaces 22A, 24B may include antireflection coatings 90. The anti-reflection coatings 90 may be non-conductive. This arrangement may allow the adjustment of the amount of light going into the sensor without utilizing moving parts, and the antireflective properties of the surfaces may prevent the formation of double images or ghosting at the sensor.

It will be understood by one having ordinary skill in the art that construction of the described disclosure and other components is not limited to any specific material. Other exemplary embodiments of the disclosure disclosed herein may be formed from a wide variety of materials, unless described otherwise herein.

It is important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other.

It should be noted that references to "front," "back," "rear," "upward," "downward," "inner," "outer," "right," and "left" in this description are merely used to identify the various elements as they are oriented in the FIGURES. These terms are not meant to limit the element which they describe, as the various elements may be oriented differently in various applications.

**Claims**

1. An electro-optic assembly comprising:

a first partially reflective, partially transmissive substrate (22) having a first surface (22A) and a second surface (22B), the first substrate (22) further having a refractive index $RI_{SUB}$ ;
a second partially reflective, partially transmissive substrate (24) having a third surface (24A) and a fourth surface (24B);
a sealing member (26) disposed about a perimeter of the first and second substrates (22, 24), wherein the sealing member (26) holds the first and second substrates (22, 24) in a spaced-apart relationship;
a chamber (28) defined by the first and second substrates (22, 24) and the sealing member (26);

an electro-optic medium (30) disposed within the chamber (28); and

an anti-reflective coating (34) disposed between the second surface (22B) of the first substrate (22) and the opposed, third surface (24A) of the second substrate (24), the anti-reflective coating (34) comprising at least a first layer (38), a second layer (40), and a third layer (42), wherein the second layer (40) comprises a transparent conductive oxide and is disposed between the first and third layers (38, 42);

wherein the anti-reflective coating (34) is a conductive coating and functions as an electrode for the electro-optic assembly;

wherein the first layer (38) of the anti-reflective coating (34) has a refractive index $RI_1$;

wherein the refractive index of the first substrate (22) is less than the refractive index of the first layer (38) of the anti-reflective coating (34) which is less than the refractive index $RI_{TCO}$ of the transparent conductive oxide in the second layer (40); and

wherein the third layer (42) comprises a plurality of sub-layers (42A, 42B), wherein a sub-layer (42A) of the third layer (42) comprises an electrically leaky silicon dioxide comprising extra openings or holes that allow easier electron movement from the transparent conductive oxide in the second layer (40) to the electro-optic medium (30) or vice versa due to porosity in its microstructure.

2.  The electro-optic assembly of one of claims 1 or 2, wherein the first layer (38) is disposed between the first substrate (22) and the second layer (40), and wherein the third layer (42) is disposed between the second layer (40) and the electro-optic medium (30).

3.  The electro-optic assembly of one of the previous claims, wherein the third layer (42) of the anti-reflective coating (34) has a refractive index $RI_3$;

wherein

$$RI_3 = \sqrt{RI_{TCO} * RI_{EO}} \; ;$$

and

wherein $RI_{TCO}$ is the refractive index of the transparent conductive oxide in second layer (40), and $RI_{EO}$ is the refractive index of the electro-optic medium (30).

4.  The electro-optic assembly of one of the previous claims, further comprising a transflector coating (32) disposed on the third surface (24A) of the second substrate (24); and

wherein the anti-reflective coating (34) is disposed between the electro-optic medium (30) and the second surface (22B) of the first substrate (22).

5.  The electro-optic assembly of one of the previous claims, further comprising a transflector coating (32) disposed on the second surface (22B) of the first substrate (22); and

wherein the anti-reflective coating (34) is disposed on the third surface (24A) of the second substrate (24).

6.  The electro-optic assembly of one of the previous claims, wherein the first layer (38) comprises a plurality of sub-layers (38A, 38B); and wherein each of the sub-layers (38A, 38B, 42A, 42B) of the first layer (38) and the third layer (42) comprises a different material than adjacent sub-layers.

7.  The electro-optic assembly of one of the previous claims, wherein at least one of the first layer (38) and the third layer (42) comprises a material having a gradient refractive index.

8.  The electro-optic assembly of one of the previous claims, wherein the optical thickness of the first and third layer (38, 42) is about one fourth or less of the device operating wavelength.

9.  The electro-optic assembly of one of the previous claims, wherein the electro-optic assembly comprises a field effect device; and wherein the third layer (42) of the anti-reflective coating (34) is non-conductive.

10. The electro-optic assembly of one of the previous claims, wherein a reflectance of the electro-optic assembly is one of CIE Y, average reflectance, and weighted reflectance.

11. The electro-optic assembly of one of the previous claims, wherein the anti-reflective coating (34) is in electrical communication with the second layer (40), and/or

wherein the electro-optic assembly is configured to allow an electrical connection to the second layer (40) of the anti-reflective coating (34) by electrically connecting a conducting medium to the second layer (40); and

wherein a portion of the third layer (42) has been removed to expose the second layer (40).

**12.** An electro-optic assembly comprising:

a first partially reflective, partially transmissive substrate (22) having a first surface (22A) and a second surface (22B), the first substrate (22) further having a refractive index $RI_{SUB}$ ;

a second partially reflective, partially transmissive substrate (24) having a third surface (24A) and a fourth surface (24B);

a sealing member (26) disposed about a perimeter of the first and second substrates (22, 24), wherein the sealing member (26) holds the first and second substrates (22, 24) in a spaced-apart relationship;

a chamber (28) defined by the first and second substrates (22, 24) and the sealing member (26);

an electro-optic medium (30) disposed within the chamber (28); and

an anti-reflective electrode (34) comprising:

a first layer (38) having a refractive index $RI_1$;

a second layer (40) comprising a transparent conductive oxide having a refractive index $RI_{TCO}$; and

a third layer (42) having a refractive index $RI_3$;

wherein the anti-reflective electrode (34) is disposed between the first substrate (22) having the refractive index $RI_{SUB}$ and the electro-optic medium (30) having a refractive index $RI_{EO}$ with the first layer (38) adjacent to the first substrate (22) and the third layer (42) adjacent to the electro-optic medium (30);

wherein

$$RI_{TCO} < RI_1 < RI_{SUB};$$

wherein

$$RI_{TCO} < RI_3 < RI_{EO};$$

and

wherein the third layer (42) comprises a plurality of sub-layers (42A, 42B), wherein a sub-layer (42A) of the third layer (42) comprises an electrically leaky silicon dioxide comprising extra openings or holes that allow easier electron movement from the transparent conductive oxide in the second layer (40) to the electro-optic medium (30) or vice versa due to porosity in its microstructure.

**13.** The electro-optic assembly of claim 12, wherein $RI_1 = \sqrt{RI_{TCO} * RI_{SUB}}$ , and/or wherein $RI_3 = \sqrt{RI_{TCO} * RI_{EO}}$ .

**14.** The electro-optic assembly of claim 12 or 13, wherein the first layer (38) comprises a plurality of sub-layers (38A, 38B), and wherein each of the sub-layers (38A, 38B, 42A, 42B) of the first layer (38) and the third layer (42) comprises a different material from adjacent layers, and/or

wherein the third layer (42) comprises a material having a gradient refractive index with the refractive index either ascending or descending from a first side of the third layer (42) to a second side of the third layer (42), and/or

wherein the anti-reflective electrode (34) is disposed on a surface of an electro-optic device; and

wherein the anti-reflective electrode (34) is disposed between a substrate (22) and an electro-optic medium (30) of the electro-optic device.

**Patentansprüche**

**1.** Eine elektrooptische Baugruppe, die Folgendes umfasst:

ein erstes teilweise reflektierendes, teilweise durchlässiges Substrat (22) mit einer ersten Oberfläche (22A) und einer zweiten Oberfläche (22B), wobei das erste Substrat (22) ferner einen Brechungsindex $RI_{SUB}$ aufweist;

ein zweites teilweise reflektierendes, teilweise durchlässiges Substrat (24) mit einer dritten Oberfläche (24A) und einer vierten Oberfläche (24B);

ein Dichtungselement (26), das um einen Umfang des ersten und zweiten Substrats (22, 24) angeordnet ist, wobei das Dichtungselement (26) das erste und zweite Substrat (22, 24) in einer voneinander beabstandeten Beziehung hält;

eine Kammer (28), die durch das erste und zweite Substrat (22, 24) und das Dichtungselement (26) definiert ist;

ein elektrooptisches Medium (30), das innerhalb der Kammer (28) angeordnet ist; und

eine Antireflexbeschichtung (34), die zwischen der zweiten Oberfläche (22B) des ersten Substrats (22) und der gegenüberliegenden dritten Oberfläche (24A) des zweiten Substrats (24) angeordnet ist, wobei die Antireflexbeschichtung (34) mindestens eine erste Schicht (38), eine zweite Schicht (40) und eine dritte Schicht (42) umfasst, wobei die zweite Schicht (40) ein transparentes leitfähiges Oxid umfasst und zwischen der ersten und der dritten Schicht (38, 42) angeordnet ist.

wobei die Antireflexbeschichtung (34) eine leitfähige Beschichtung ist und als Elektrode für die elektrooptische Baugruppe fungiert;

wobei die erste Schicht (38) der Antireflexbeschichtung (34) einen Brechungsindex $RI_1$ aufweist;

wobei der Brechungsindex des ersten Substrats (22) kleiner ist als der Brechungsindex der ersten Schicht (38) der Antireflexbeschichtung (34), der kleiner ist als der Brechungsindex $RI_{TCO}$ des transparenten leitfähigen Oxids in der zweiten Schicht (40); und

wobei die dritte Schicht (42) eine Vielzahl von Unterschichten (42A, 42B) umfasst, wobei eine Unterschicht (42A) der dritten Schicht (42) ein elektrisch durchlässiges (*leaky*) Siliziumdioxid umfasst, das zusätzliche Öffnungen oder Löcher aufweist, die aufgrund der Porosität in seiner Mikrostruktur eine leichtere Elektronenbewegung vom transparenten leitfähigen Oxid in der zweiten Schicht (40) zum elektrooptischen Medium (30) oder umgekehrt ermöglichen.

2. Die elektrooptische Baugruppe nach einem der Ansprüche 1 oder 2, wobei die erste Schicht (38) zwischen dem ersten Substrat (22) und der zweiten Schicht (40) angeordnet ist, und wobei die dritte Schicht (42) zwischen der zweiten Schicht (40) und dem elektrooptischen Medium (30) angeordnet ist.

3. Die elektrooptische Baugruppe nach einem der vorstehenden Ansprüche, wobei die dritte Schicht (42) der Antireflexbeschichtung (34) einen Brechungsindex $RI_3$ aufweist;

wobei

$$RI_3 = \sqrt{RI_{TCO} * RI_{EO}}\,;$$

und

wobei $RI_{TCO}$ der Brechungsindex des transparenten leitfähigen Oxids in der zweiten Schicht (40) ist und $RI_{EO}$ der Brechungsindex des elektrooptischen Mediums (30) ist.

4. Die elektrooptische Baugruppe nach einem der vorstehenden Ansprüche, ferner umfassend eine Transflektor-Beschichtung (32), die auf der dritten Oberfläche (24A) des zweiten Substrats (24) angeordnet ist; und

wobei die Antireflexbeschichtung (34) zwischen dem elektrooptischen Medium (30) und der zweiten Oberfläche (22B) des ersten Substrats (22) angeordnet ist.

5. Die elektrooptische Baugruppe nach einem der vorstehenden Ansprüche, ferner umfassend eine Transflektor-Beschichtung (32), die auf der zweiten Oberfläche (22B) des ersten Substrats (22) angeordnet ist; und

wobei die Antireflexbeschichtung (34) auf der dritten Oberfläche (24A) des zweiten Substrats (24) angeordnet ist.

6. Die elektrooptische Baugruppe nach einem der vorstehenden Ansprüche, wobei die erste Schicht (38) eine Vielzahl von Unterschichten (38A, 38B) umfasst; und wobei jede der Unterschichten (38A, 38B, 42A, 42B) der ersten Schicht (38) und der dritten Schicht (42) ein anderes Material als die angrenzenden Unterschichten umfasst.

7. Die elektrooptische Baugruppe nach einem der vorstehenden Ansprüche, wobei zumindest eine von der ersten Schicht (38) und der dritten Schicht (42) ein Material mit einem Gradientenbrechungsindex umfasst.

8. Die elektrooptische Baugruppe nach einem der vorstehenden Ansprüche, wobei die optische Dicke der ersten und dritten Schicht (38, 42) etwa ein Viertel oder weniger der Betriebswellenlänge der Vorrichtung beträgt.

9. Die elektrooptische Baugruppe nach einem von vorstehenden Ansprüchen, wobei die elektrooptische Baugruppe eine Feldeffektvorrichtung umfasst; und wobei die dritte Schicht (42) der Antireflexbeschichtung (34) nichtleitend ist.

10. Die elektrooptische Baugruppe nach einem der vorstehenden Ansprüche, wobei der Reflexionsgrad der elektro-optischen Baugruppe eine der folgenden Größen ist: CIE Y, mittlerer Reflexionsgrad und gewichteter Reflexionsgrad.

11. Die elektrooptische Baugruppe nach einem der vorstehenden Ansprüche, wobei die Antireflexbeschichtung (34) in elektrischer Verbindung mit der zweiten Schicht (40) steht und/oder

    wobei die elektrooptische Baugruppe so konfiguriert ist, dass sie eine elektrische Verbindung mit der zweiten Schicht (40) der Antireflexbeschichtung (34) ermöglicht, indem ein leitendes Medium elektrisch mit der zweiten Schicht (40) verbunden wird; und
    wobei ein Abschnitt der dritten Schicht (42) entfernt wurde, um die zweite Schicht (40) freizulegen.

12. Eine elektrooptische Baugruppe, umfassend:

    ein erstes teilweise reflektierendes, teilweise durchlässiges Substrat (22) mit einer ersten Oberfläche (22A) und einer zweiten Oberfläche (22B), wobei das erste Substrat (22) ferner einen Brechungsindex $RI_{SUB}$ aufweist;
    ein zweites teilweise reflektierendes, teilweise durchlässiges Substrat (24) mit einer dritten Oberfläche (24A) und einer vierten Oberfläche (24B);
    ein Dichtungselement (26), das um einen Umfang des ersten und zweiten Substrats (22, 24) angeordnet ist, wobei das Dichtungselement (26) das erste und zweite Substrat (22, 24) in einer voneinander beabstandeten Beziehung hält;
    eine Kammer (28), die durch das erste und zweite Substrat (22, 24) und das Dichtungselement (26) definiert ist;
    ein elektrooptisches Medium (30), das innerhalb der Kammer (28) angeordnet ist; und
    eine antireflektierende Elektrode (34), die Folgendes umfasst:

        eine erste Schicht (38) mit einem Brechungsindex $RI_1$;
        eine zweite Schicht (40), die ein transparentes leitfähiges Oxid mit einem Brechungsindex $RI_{TCO}$ umfasst; und
        eine dritte Schicht (42) mit einem Brechungsindex $RI_3$;
        wobei die antireflektierende Elektrode (34) zwischen dem ersten Substrat (22) mit dem Brechungsindex $RI_{SUB}$ und dem elektrooptischen Medium (30) mit einem Brechungsindex $RI_{EO}$ angeordnet ist, wobei die erste Schicht (38) an das erste Substrat (22) angrenzt und die dritte Schicht (42) an das elektrooptische Medium (30) angrenzt;
        wobei

$$RI_{TCO} < RI_1 < RI_{SUB};$$

        wobei

$$RI_{TCO} < RI_3 < RI_{EO};$$

        und
        wobei die dritte Schicht (42) eine Vielzahl von Unterschichten (42A, 42B) umfasst, wobei eine Unterschicht (42A) der dritten Schicht (42) ein elektrisch durchlässiges (*leaky*) Siliziumdioxid umfasst, das zusätzliche Öffnungen oder Löcher aufweist, die aufgrund der Porosität in seiner Mikrostruktur eine leichtere Elektronenbewegung vom transparenten leitfähigen Oxid in der zweiten Schicht (40) zum elektrooptischen Medium (30) oder umgekehrt ermöglichen.

13. Die elektrooptische Baugruppe nach Anspruch 12, wobei $RI_1 = \sqrt{RI_{TCO} * RI_{SUB}}$ , und/oder
wobei

$$RI_3 = \sqrt{RI_{TCO} * RI_{EO}}.$$

14. Die elektrooptische Baugruppe nach Anspruch 12 oder 13, wobei die erste Schicht (38) eine Vielzahl von Unterschichten (38A, 38B) umfasst, und wobei jede der Unterschichten (38A, 38B, 42A, 42B) der ersten Schicht (38) und der dritten Schicht (42) ein anderes Material als die angrenzenden Unterschichten umfasst, und/oder

wobei die dritte Schicht (42) ein Material mit einem GradientenBrechungsindex umfasst, wobei der Brechungsindex von einer ersten Seite der dritten Schicht (42) zu einer zweiten Seite der dritten Schicht (42) entweder ansteigt oder abfällt, und/oder
wobei die antireflektierende Elektrode (34) auf einer Oberfläche einer elektrooptischen Vorrichtung angeordnet ist; und
wobei die antireflektierende Elektrode (34) zwischen einem Substrat (22) und einem elektrooptischen Medium (30) der elektrooptischen Vorrichtung angeordnet ist.

## Revendications

1. Un ensemble électro-optique comprenant :

un premier substrat partiellement réfléchissant, partiellement transmissif (22) présentant une première surface (22A) et une deuxième surface (22B), le premier substrat (22) présentant en outre un indice de réfraction $RI_{SUB}$;
un deuxième substrat partiellement réfléchissant, partiellement transmissif (24) présentant une troisième surface (24A) et une quatrième surface (24B) ;
un élément d'étanchéité (26) disposé autour d'un périmètre des substrats premier et second (22, 24), sachant que l'élément d'étanchéité (26) maintient les substrats premier et deuxième (22, 24) dans une relation espacée ;
une chambre (28) définie par les substrats premier et deuxième (22, 24) et l'élément d'étanchéité (26) ;
un milieu électro-optique (30) disposé à l'intérieur de la chambre (28) ;
et
un revêtement antireflet (34) disposé entre la deuxième surface (22B) du premier substrat (22) et la troisième surface (24A), opposée, du deuxième substrat (24), le revêtement antireflet (34) comprenant au moins une première couche (38), une deuxième couche (40) et une troisième couche (42), sachant que la deuxième couche (40) comprend un oxyde conducteur transparent et est disposée entre les couches première et troisième (38, 42)
sachant que le revêtement antireflet (34) est un revêtement conducteur et fonctionne comme une électrode pour l'ensemble électro-optique ;
sachant que la première couche (38) du revêtement antireflet (34) présente un indice de réfraction $RI_1$;
sachant que l'indice de réfraction du premier substrat (22) est inférieur à l'indice de réfraction de la première couche (38) du revêtement antireflet (34) qui est inférieur à l'indice de réfraction $RI_{TCO}$ de l'oxyde conducteur transparent dans la deuxième couche (40) ; et
sachant que la troisième couche (42) comprend une pluralité de sous-couches (42A, 42B), sachant qu'une sous-couche (42A) de la troisième couche (42) comprend un dioxyde de silicium électriquement fuyant (*leaky*) comprenant des ouvertures ou des trous supplémentaires qui permettent un mouvement plus facile des électrons depuis l'oxyde conducteur transparent dans la deuxième couche (40) vers le milieu électro-optique (30) ou vice versa en raison de la porosité de sa microstructure.

2. L'ensemble électro-optique d'après la revendication 1 ou 2, sachant que la première couche (38) est disposée entre le premier substrat (22) et la deuxième couche (40), et sachant que la troisième couche (42) est disposée entre la deuxième couche (40) et le milieu électro-optique (30).

3. L'assemblage électro-optique d'après l'une des revendications précédentes, sachant que la troisième couche (42) du revêtement antireflet (34) présente un indice de réfraction $RI_3$;

sachant que

$$RI_3 = \sqrt{RI_{TCO} * RI_{EO}} ;$$

et

sachant que $RI_{TCO}$ est l'indice de réfraction de l'oxyde conducteur transparent dans la deuxième couche (40), et que $RI_{EO}$ est l'indice de réfraction du milieu électro-optique (30).

**4.** L'ensemble électro-optique d'après l'une des revendications précédentes, comprenant en outre un revêtement transflecteur (32) disposé sur la troisième surface (24A) du deuxième substrat (24) ; et sachant que le revêtement antireflet (34) est disposé entre le milieu électro-optique (30) et la deuxième surface (22B) du premier substrat (22).

**5.** L'ensemble électro-optique d'après l'une des revendications précédentes, comprenant en outre un revêtement transflecteur (32) disposé sur la deuxième surface (22B) du premier substrat (22) ; et sachant que le revêtement antireflet (34) est disposé sur la troisième surface (24A) du deuxième substrat (24).

**6.** L'ensemble électro-optique d'après l'une des revendications précédentes, sachant que la première couche (38) comprend une pluralité de sous-couches (38A, 38B) ; et sachant que chacune des sous-couches (38A, 38B, 42A, 42B) de la première couche (38) et de la troisième couche (42) comprend un matériau différent de celui des sous-couches adjacentes.

**7.** L'ensemble électro-optique d'après l'une des revendications précédentes, sachant que au moins l'une parmi la première couche (38) et la troisième couche (42) comprend un matériau présentant un indice de réfraction gradient.

**8.** L'ensemble électro-optique d'après l'une des revendications précédentes, sachant que l'épaisseur optique des couches première et troisième (38, 42) est d'environ un quart ou moins de la longueur d'onde de fonctionnement du dispositif.

**9.** L'ensemble électro-optique d'après l'une des revendications précédentes, sachant que l'ensemble électro-optique comprend un dispositif à effet de champ ; et sachant que la troisième couche (42) du revêtement antireflet (34) est non conductrice.

**10.** L'ensemble électro-optique d'après l'une des revendications précédentes, sachant que la réflectance de l'ensemble électro-optique est l'une parmi CIE Y, la réflectance moyenne et la réflectance pondérée.

**11.** L'ensemble électro-optique d'après l'une des revendications précédentes, sachant que le revêtement antireflet (34) est en communication électrique avec la deuxième couche (40), et/ou

sachant que l'ensemble électro-optique est configuré pour permettre une connexion électrique à la deuxième couche (40) du revêtement antireflet (34) en connectant électriquement un milieu conducteur à la deuxième couche (40) ; et sachant qu'une portion de la troisième couche (42) a été retirée pour exposer la deuxième couche (40).

**12.** Un ensemble électro-optique comprenant :

un premier substrat partiellement réfléchissant, partiellement transmissif (22) présentant une première surface (22A) et une deuxième surface (22B), le premier substrat (22) présentant en outre un indice de réfraction $RI_{SUB}$ ; un deuxième substrat partiellement réfléchissant, partiellement transmissif (24) présentant une troisième surface (24A) et une quatrième surface (24B) ; un élément d'étanchéité (26) disposé autour d'un périmètre des substrats premier et deuxième (22, 24), sachant que l'élément d'étanchéité (26) maintient les substrats les premier et deuxième (22, 24) dans une relation espacée ; une chambre (28) définie par les substrats premier et deuxième (22, 24) et l'élément d'étanchéité (26) ; un milieu électro-optique (30) disposé à l'intérieur de la chambre (28) ; et une électrode antireflet (34) comprenant :

une première couche (38) présentant un indice de réfraction $RI_1$ ; une deuxième couche (40) comprenant un oxyde conducteur transparent présentant un indice de réfraction $RI_{TCO}$ ; et une troisième couche (42) présentant un indice de réfraction $RI_3$ ; sachant que l'électrode antireflet (34) est disposée entre le premier substrat (22) présentant l'indice de réfraction $RI_{SUB}$ et le milieu électro-optique (30) présentant un indice de réfraction $RI_{EO}$, la première couche (38) étant adjacente au premier substrat (22) et la troisième couche (42) étant adjacente au milieu électro-optique (30) ;

sachant que

$$RI_{TCO} < RI_1 < RI_{SUB} \;;$$

sachant que

$$RI_{TCO} < RI_3 < RI_{EO} \;;$$

et

sachant que la troisième couche (42) comprend une pluralité de sous-couches (42A, 42B), sachant qu'une sous-couche (42A) de la troisième couche (42) comprend un dioxyde de silicium électriquement fuyant (*leaky*) comprenant des ouvertures ou des trous supplémentaires qui permettent un mouvement plus facile des électrons depuis l'oxyde conducteur transparent dans la deuxième couche (40) vers le milieu électro-optique (30) ou vice versa en raison de la porosité de sa microstructure.

13. L'ensemble électro-optique d'après la revendication 12, sachant que $RI_1 = \sqrt{RI_{TCO} * RI_{SUB}}$ , et/ou sachant que

$$RI_3 = \sqrt{RI_{TCO} * RI_{EO}} \,.$$

14. L'ensemble électro-optique d'après la revendication 12 ou 13, sachant que la première couche (38) comprend une pluralité de sous-couches (38A, 38B), et sachant que chacune des sous-couches (38A, 38B, 42A, 42B) de la première couche (38) et la troisième couche (42) comprennent un matériau différent de celui des couches adjacentes, et/ou

sachant que la troisième couche (42) comprend un matériau présentant un indice de réfraction gradient, l'indice de réfraction augmentant ou diminuant d'un premier côté de la troisième couche (42) vers un deuxième côté de la troisième couche (42), et/ou

sachant que l'électrode antireflet (34) est disposée sur une surface d'un dispositif électro-optique ; et

sachant que l'électrode antireflet (34) est disposée entre un substrat (22) et un milieu électro-optique (30) du dispositif électro-optique.

**FIG. 1A**

**FIG. 1B**

**FIG. 1C**

**FIG. 2**

**FIG. 3**

**FIG. 4**

**FIG. 5**

**FIG. 6**

56

52A

52

52B

58

54A

54

54B

60

56

70

72

62

53

51

**FIG. 7**

56    86    92

52A

52

52B

58

54A

54

54B

60

56

61

62

70

72

89

82A

82

82B

84A

84

84B

88

92

53    86    51

**FIG. 8**

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62898689
- US 9057875 B
- US 8879139 B
- US 9505349 B
- US 9575315 B
- US 10018843 B
- US 20180329210
- WO 9415247 A1
- CN 104880884 B
- US 2018113306 A1
- US 2006269731 A1
- US 2007241668 A1